# EUROPEAN PATENT APPLICATION

(11) **EP 4 804 048 A1**
(43) Date of publication of application: **09.09.2026**
(21) Application number: 25215935.5
(22) Date of filing: 14.11.2025
(51) Int. Cl.: G06F 16/25, G06F 16/2453

(54) **MULTI-MODAL FUSION DATA PROCESSING METHOD, APPARATUS, MEDIUM, ELECTRONIC DEVICE, AND PROGRAM PRODUCT**

(30) Priority: 03.03.2025 CN 202510246518
(71) Applicant: Beijing Volcano Engine Technology Co., Ltd., Beijing 100190 (CN)
(72) Inventor: Xu, Li, Beijing, 100028 (CN)
(74) Representative: Grünecker Patent- und Rechtsanwälte PartG mbB

(57) **Abstract**

The present discloser relates to a multi-modal fusion data processing method and apparatus, a medium, an electronic device, and a program product. The method includes: receiving (S11) a multi-modal data retrieval statement, parsing the multi-modal data retrieval statement, and translating the multi-modal data retrieval statement into single-modal data retrieval statements respectively corresponding to a plurality of modalities; performing (S12), according to each of the single-modal data retrieval statements, data retrieval in a corresponding single-modal database in a multi-modal database to obtain target data of different modalities; where single-modal databases respectively corresponding to the plurality of modalities are maintained in the multi-modal database, and data management is performed independently for each of the single-modal databases; performing (S13) feature fusion and modality alignment processing on the retrieved target data of different modalities to generate a unified multi-modal data representation, and feeding back the unified multi-modal data representation as a retrieval result.

## Description

### FIELD

The present disclosure relates to the field of computer technologies, and more specifically, to a multi-modal fusion data processing method, an apparatus, a medium, an electronic device, and a program product.

### BAC KGRO UND

Amulti-modal fusion database is an integrated intelligent database that can perform various tasks such as storing, accessing, and processing different types of data, to support diverse application services.

Currently, when a multi-modal fusion database performs multi-modal data integrating in response to an application service, the data processing complexity is high, the data processing efficiency is low, and it is difficult to meet service requirements with high timeliness requirements.

### SUMMARY

The Summary section is provided in order to introduce ideas in a brief form, which will be described in detail in the following Detailed Description section. The Summary section is not intended to identify key features or essential features of the claimed technical solution, nor intended to be used to limit the scope of the claimed technical solution.

In the first aspect, the present disclosure provides a multi-modal fusion data processing method, including:
receiving a multi-modal data retrieval statement, parsing the multi-modal data retrieval statement, and translating the multi-modal data retrieval statement into single-modal data retrieval statements respectively corresponding to a plurality of modalities;
performing, according to each of the single-modal data retrieval statements, data retrieval in a corresponding single-modal database in a multi-modal database to obtain target data of different modalities, where the single-modal databases respectively corresponding to the plurality of modalities are maintained in the multi-modal database, and data management is performed independently for each of the single-modal databases; and
performing feature fusion and modality alignment processing on the retrieved target data of different modalities to generate a unified multimodal data representation, and feeding back the unified multi-modal data representation as a retrieval result.

In the second aspect, the present disclosure provides a multi-modal fusion data processing apparatus, including:
a parsing and translation module, configured to receive a multi-modal data retrieval statement, parse the multi-modal data retrieval statement, and translate the multi-modal data retrieval statement into single-modal data retrieval statements respectively corresponding to a plurality of modalities;
a retrieval module, configured to perform, according to each of the single-modal data retrieval statements, data retrieval in a corresponding single-modal database in a multi-modal database to obtain target data of different modalities, where the single-modal databases respectively corresponding to the plurality of modalities are maintained in the multi-modal database, and data management is performed independently for each of the single-modal databases; and
a feedback module, configured to perform feature fusion and modality alignment processing on the retrieved target data of different modalities to generate a unified multimodal data representation, and feed back the unified multimodal data representation as a retrieval result.

In the third aspect, the present disclosure provides a computer-readable medium having a computer program stored thereon, where the computer program, when executed by a processing apparatus, implements the steps of any method in the first aspect are implemented.

In the fourth aspect, the present disclosure provides an electronic device, including:
a storage apparatus having a computer program stored thereon; and
a processing apparatus, configured to execute the computer program in the storage apparatus to perform the steps of any method in the first aspect.

In the fifth aspect, the present disclosure provides a computer program product, including a computer program which, when executed by a processor, implements the steps of any method in the first aspect

By adopting the above technical solution, the multi-modal data retrieval statement can be received, the multi-modal data retrieval statement is parsed and translated into the single-modal data retrieval statements respectively corresponding to the plurality of modalities, and data retrieval is performed in the corresponding single-modal database in the multi-modal database according to each of the single-modal data retrieval statements to obtain the target data of different modalities, where the single-modal databases respectively corresponding to the plurality of modalities are maintained in the multi-modal database, and data management is performed independently for each of the single-modal databases, and then feature fusion and modality alignment processing are performed on the retrieved target data of different modalities to generate the unified multi-modal data representation, and the unified multi-modal data representation is fed back as the retrieval result. In this way, when performing multi-modal data integrating in response to an application service, the data processing complexity can be reduced, the data processing efficiency may be improved, and service requirements with high timeliness requirements may be met.

Other features and advantages of the present disclosure will be described in detail in the following Detailed Description section.

### BRIEF DESCRIPTION OF THE DRAWINGS

The above and other features, advantages, and aspects of the embodiments of the present disclosure will become more apparent when taken in conjunction with the drawings and with reference to the following Detailed Description. Throughout the drawings, the same or similar reference numerals refer to the same or similar elements. It should be understood that the drawings are schematic and that the components and elements are not necessarily drawn to scale. In the drawings:
Fig. 1 is a flowchart of a multi-modal fusion data processing method according to an embodiment of the present disclosure;
Fig. 2 shows a schematic diagram of a definition of a multi-modal SQL retrieval syntax and a semantic understanding based on a large language model and a multi-modal RAG model according to an embodiment of the present disclosure;
Fig. 3 shows a schematic diagram of translating an SQL multi-modal retrieval statement into an InfluxDB time-series retrieval statement and an ElasticSearch retrieval statement through semantic understanding and translation according to an embodiment of the present disclosure;
Fig. 4 is an architecture diagram of a multi-modal fusion data processing architecture according to an embodiment of the present disclosure;
Fig. 5 is a schematic block diagram of a multi-modal fusion data processing apparatus according to an embodiment of the present disclosure; and
Fig. 6 shows a schematic structural diagram of an electronic device suitable for implementing an embodiment of the present disclosure.

### DETAILED DESCRIPTION OF EMBODIMENTS

Embodiments of the present disclosure will now be described in detail with reference to the drawings. Although some embodiments of the present disclosure are shown in the drawings, it should be understood that the present disclosure may be implemented in various forms and should not be construed as limited to the embodiments set forth herein. Instead, these embodiments are provided for a more thorough and complete understanding of the present disclosure. It should be understood that the drawings and embodiments of the present disclosure are only used for exemplary purposes, and are not used to limit the protection scope of the present disclosure.

It should be understood that the various steps described in the method implementations of the present disclosure may be performed in different orders and/or in parallel. Furthermore, the method implementations may include additional steps and/or omit performing the illustrated steps. The scope of the present disclosure is not limited in this regard.

As used herein, the term "include/comprise" and variations thereof are open-ended inclusions, that is, "include/comprise but not limited to". The term "based on" is "based at least in part on". The term "one embodiment" means "at least one embodiment"; the term "another embodiment" means "at least one other embodiment"; the term "some embodiments" means "at least some embodiments". Relevant definitions of other terms will be given in the following description.

It should be noted that concepts such as "first" and "second" mentioned in the present disclosure are only used to distinguish different apparatuses, modules or units, and are not used to limit the order of functions performed by these apparatuses, modules or units, or interdependence therebetween.

It should be noted that the modifications of "one" and "a plurality of" mentioned in the present disclosure are illustrative and not restrictive, and those skilled in the art should understand that unless clearly indicated in the context, they should be understood as "one or more".

The names of messages or information exchanged between multiple apparatuses in the implementations of the present disclosure are only used for illustrative purposes, and are not used to limit the scope of these messages or information.

It may be understood that before using the technical solutions disclosed in the embodiments of the present disclosure, the user shall be informed of the type, range of use, use scenarios, etc. of personal information involved in the present disclosure in an appropriate manner and obtain the authorization of the user in accordance with relevant laws and regulations.

For example, in response to receiving an active request from a user, prompt information is sent to the user to clearly prompt the user that the requested operation will require access to and use of the user's personal information. In this way, the user may independently choose whether to provide personal information to software or hardware, such as an electronic device, an application, a server, or a storage medium, that performs the operations of the technical solutions of the present disclosure based on the prompt information.

As an optional but non-limiting implementation, in response to receiving an active request from a user, the manner of sending prompt information to the user may be, for example, a pop-up window, and the prompt information may be presented in the pop-up window in text. In addition, the pop-up window may also carry a selection control for the user to select "agree" or "disagree" to provide personal information to the electronic device.

It may be understood that the above process of notifying and obtaining user authorization is only illustrative, and does not limit the implementations of the present disclosure, and other manners that meet relevant laws and regulations may also be applied in the implementations of the present disclosure.

At the same time, it may be understood that the data involved in the technical solution (including but not limited to the data itself, acquisition or use of the data) shall comply with requirements of corresponding laws, regulations and related provisions.

In the related art, a multi-modal database is usually implemented by using an architecture in which a single storage engine supports multiple data models. In this architecture, a universal storage engine is designed at the bottom layer of the multi-modal database, and the storage engine can store data of different data models in a unified manner. For example, by abstracting data into basic units (such as byte streams or specific object structures), and then classifying and storing them according to the type tags of the data (the type tags are used to represent whether it is relational data, document data, graph data, etc.). Taking graph data as an example, nodes and edges may be regarded as special objects and stored in the storage engine, and the table structure of relational data is transformed into a storage form of object relationships, while document data is stored according to its own hierarchical structure, and at the same time, there will be some metadata at the storage level to identify the type and structural features of the data. When performing data query, the native multi-modal database will design a unified query language or support multiple query syntaxes under a query framework. For example, a new query language is developed, which may be compatible with partial functions of the structured query language (Structural Query Language, SQL) of the relational database in terms of syntax, and at the same time, may process JSON path-like queries for document data and path traversal queries for graph data, etc. In terms of data consistency assurance, during operations such as data update and deletion, the native multi-modal database ensures data consistency between different data models by a transaction management mechanism. For example, when a record in a relational data table is associated with a certain document in a document data (such as through a foreign key or a logical relationship), during the transaction processing, the multi-modal database will ensure that the operations on both are either successful at the same time or failed at the same time, which may be achieved by setting up log records, lock mechanisms, etc. at the storage engine level.

When this architecture performs multi-modal data integrating in response to an application service, the data processing complexity is high, the data processing efficiency is low, and it is difficult to meet service requirements with high timeliness requirements.

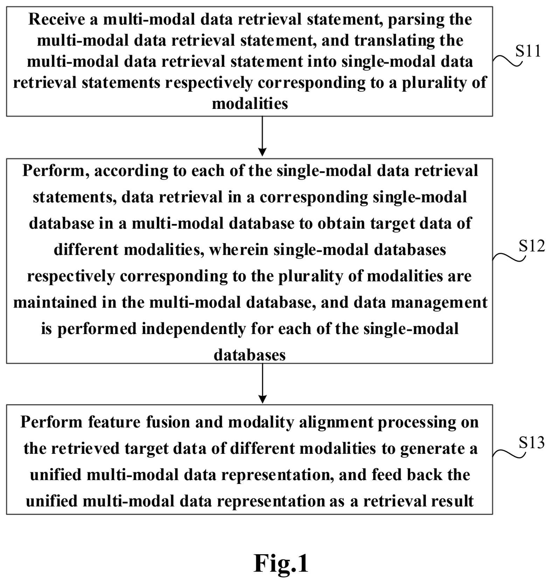

Fig. 1 is a flowchart of a multi-modal fusion data processing method according to an embodiment of the present disclosure. The multi-modal fusion data processing method can be applied to scenarios of performing various operations on a multi-modal database, such as retrieval and storage. As shown in Fig. 1, the multi-modal fusion data processing method may include the following steps S11 to S13.

In step S11, a multi-modal data retrieval statement is received, and the multi-modal data retrieval statement is parsed and translated into single-modal data retrieval statements respectively corresponding to a plurality of modalities.

The multi-modal data retrieval statement may be an SQL retrieval statement.

In some embodiments, the multi-modal data retrieval statement may be parsed as follows.

First, a large language model (LLM) is called to decompose the multi-modal data retrieval statement into words and syntactic units, and construct a syntax tree based on the words and syntactic units. For example, the large language model may use lexical analysis and syntactic analysis techniques to decompose the multi-modal data retrieval statement into individual words and syntactic units, and construct a syntax tree based on the words and syntactic units. In addition, before decomposing the multi-modal data retrieval statement into words and syntactic units, the large language model may further check whether the multi-modal data retrieval statement conforms to SQL syntax rules, and if there is a syntax error, error information may be returned to the user.

Then, a multi-modal retrieval augmented generation (RAG) model is called to retrieve a preliminary semantic understanding result from a corresponding knowledge base based on the syntax tree, and the large language model is called to process the preliminary semantic understanding result to obtain a parsing of the multi-modal data retrieval statement. That is, on the basis of the constructed syntax tree, the semantics of the multi-modal data retrieval statement are further analyzed to determine the user's data processing intention, operation object, conditional constraints, etc., for example, to determine whether the user wants to perform data query, insertion, update or delete operations, and which tables, columns, conditional expressions, etc. of the multi-modal database are involved. When performing semantic understanding, a pre-built knowledge graph may be referred to. For example, the multi-modal RAG model may be called to perform retrieval from the pre-built knowledge graph based on the constructed syntax tree to obtain a preliminary semantic understanding result, and then the large language model is called to perform processing based on the preliminary semantic understanding result to obtain a parsing of the multi-modal data retrieval statement.

In some embodiments, translating the parsing result of the multi-modal data retrieval statement into the single-modal data retrieval statements respectively corresponding to the plurality of modalities may be implemented as follows. First, according to respective modal information in the multi-modal database, a table name, a column name, etc. in the parsing result are matched with actual respective data modalities, and the parsing result is translated into corresponding operations for the matched modal data. For example, for a joint query involving different data modalities (such as a relational data modal, a document data modal, a graph data modal, a key-value pair data modal, etc.), the parsing result may be decomposed into sub-queries for each data modal, and related conversion and coordination may be performed, for example, translated into operation instructions for corresponding single-modal databases that can be understood and processed by the multi-modal database.

The relational data modal stores data in a table form, and manages and queries the data through relationships (such as a primary key-foreign key relationship). The document data modal stores data in JSON-like document forms, each of which may have a different structure, and is suitable for storing semi-structured data. The graph data modal represents entities and relationships between the entities with nodes and edges, and is suitable for representing complex relational data such as social networks and knowledge graphs. The key-value pair data modal is a simple key-value storage and is suitable for quickly finding a simple value corresponding to a specific key, such as a cache scenario.

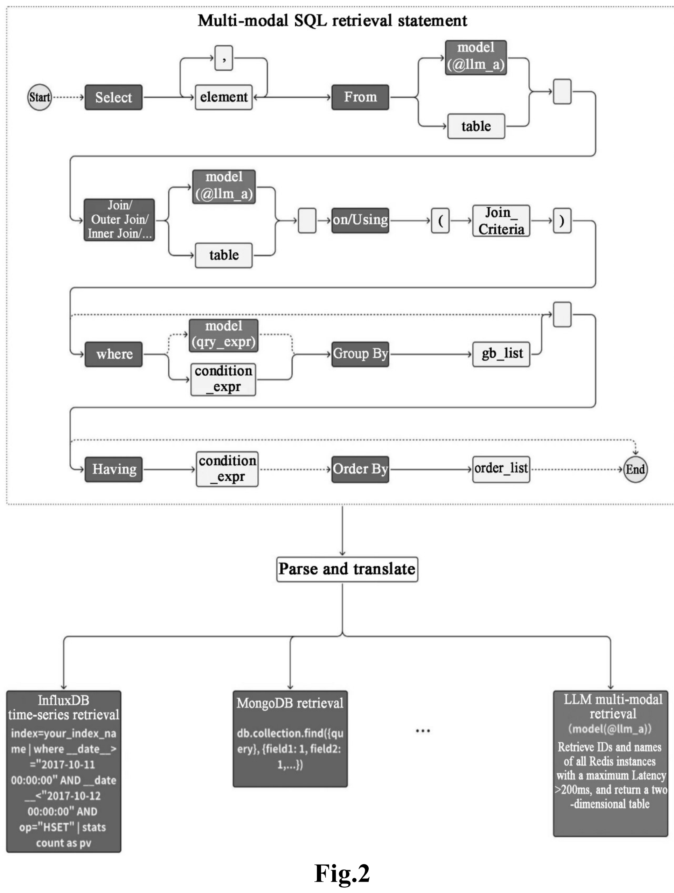

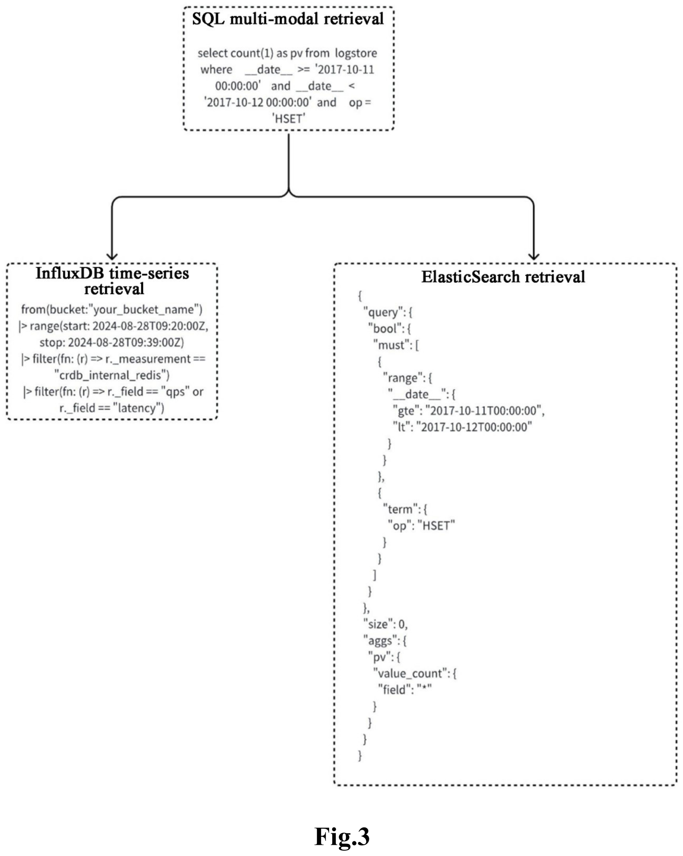

Fig. 2 shows, by using an example in which the multi-modal data retrieval statement is an SQL retrieval statement, a schematic diagram of a definition of a multi-modal SQL retrieval syntax and parsing the multi-modal data retrieval statement based on a large language model and a multi-modal RAG model. It may be seen from Fig. 2 that after parsing and translation processing based on the large language model and the multi-modal RAG model, the multi-modal data retrieval statement is parsed and translated into an InfluxDB time-series retrieval statement, a MongoDB retrieval statement, a large language model multi-modal retrieval statement, and the like. Fig. 3 shows, by using an example in which the multi-modal data retrieval statement is an SQL retrieval statement, a schematic diagram of parsing and translating the multi-modal data retrieval statement into a retrieval statement for InfluxDB time-series retrieval and a retrieval statement for Elastic Search retrieval through parsing and translation according to an embodiment of the present disclosure. The InfluxDB time-series retrieval refers to performing time-based sequence data retrieval using an InfluxDB database.

InfluxDB is a time-series database used to store time-series data, such as time-series data collected by sensors (such as temperature and pressure changes over time). These data are indexed by timestamps to facilitate quick query of data in a specific time period. MongoDB is a document database used to store document data, including text files in various formats (such as PDF and Word documents), image description documents, audio transcription texts, etc. The document database can store data in a flexible JSON format, which is convenient for processing complex document structures and nested data. In addition, the modal database may further include a wide-table database and a relational database. The wide-table database uses data warehouse technologies (such as Hive or Snowflake) to store wide-table data and is suitable for storing datasets with a large number of columns and sparse data, such as user behavior data, product attribute data, etc. The wide-table may facilitate multidimensional analysis and aggregation operations. The relational database (such as MySQL or PostgreSQL) may be used to store data with a clear relational structure, such as associated data between a user table, an order table and a product table, and perform efficient relational query and transaction processing through SQL.

In some embodiments, after translation, the translated single-modal data retrieval statement may be optimized according to data distribution and statistical information of the multi-modal database and complexity of the translated single-modal data retrieval statement. The data distribution refers to a probability distribution of data stored in each of the single-modal databases, and generally may be represented by a probability density function. The statistical information refers to statistical information related to the data stored in each of the single-modal databases, such as statistical information of retrieval frequency, data volume, retrieval mode, etc. During optimization, at least one of a connection mode, a connection sequence, an index construction mode and a view creation mode of the translated single-modal data retrieval statement may be adjusted according to the data distribution and the statistical information of the multi-modal database and the complexity of the translated single-modal data retrieval statement, for example, a query plan may be adjusted, an appropriate index may be selected, and operation steps may be combined or simplified. For example, to retrieve a piece of complete logistics information of a purchased commodity, it is necessary to simultaneously retrieve a commodity transaction relational database and a logistics transfer process time-series database to obtain related retrieval data, and then concatenate them to obtain a dataset for return. Then, a process of parsing and translating a multi-modal data retrieval statement into two or more different modal database retrievals and then merging them may be implemented by identifying frequently accessed data and storing it uniformly in the relational database or the time-series database, which can reduce the number or frequency of retrievals. That is, through optimization, an optimal retrieval plan can be generated, retrieval efficiency and performance ban be improved, and unnecessary computation and data access can be reduced.

In step S12, data retrieval is performed, according to each of the single-modal data retrieval statements, in the corresponding single-modal database in the multi-modal database to obtain the target data of different modalities, where the single-modal databases respectively corresponding to the plurality of modalities are maintained in the multi-modal database, and data management is performed independently for each of the single-modal databases.

In step S13, feature fusion and modality alignment processing are performed on the retrieved target data of different modalities to generate the unified multi-modal data representation, and the unified multi-modal data representation is fed back as the retrieval result.

By adopting the above technical solution, the multi-modal data retrieval statement can be received, the multi-modal data retrieval statement is parsed and translated into the single-modal data retrieval statements respectively corresponding to the plurality of modalities, and data retrieval is performed in the corresponding single-modal database in the multi-modal database according to each of the single-modal data retrieval statements to obtain the target data of different modalities, where the single-modal databases respectively corresponding to the plurality of modalities are maintained in the multi-modal database, and data management is performed independently for each of the single-modal databases, and then feature fusion and modality alignment processing are performed on the retrieved target data of different modalities to generate the unified multi-modal data representation, and the unified multi-modal data representation is fed back as the retrieval result. In this way, when performing multi-modals data integrating in response to an application service, the data processing complexity can be reduced, the data processing efficiency can be improved, and service requirements with high timeliness requirements can be met.

In some embodiments, for the single-modal database of each modal, data therein is vectorized, and indexes are established for all vectorized data. For example, for text data, text indexing techniques such as inverted indexing may be used to establish an index; for data such as images and audio, an index structure based on feature vectors, such as a KD-Tree, a hash table, etc., may be used. In addition, a hybrid index structure may also be constructed in combination with the characteristics of multi-modal data, so that data of different modalities can be efficiently retrieved. In this way, after the single-modal data retrieval statement for the single-modal database of each modal is obtained through translation, the data targeted by the single-modal data retrieval statement may be determined according to the corresponding index, and the retrieval efficiency may be improved. Moreover, during retrieval, the retrieval operation may be performed based on corresponding adaptation interfaces and operation methods provided for different data modalities. For example, for the relational data modal, operation methods such as definition of a table structure, index creation, data insertion and query are provided; for the document data modal, functions such as creation, update and full-text search of documents are provided, and the retrieval may be performed based on these provided operation methods.

In some embodiments, performing , according to each of the single-modal data retrieval statements, the data retrieval in the corresponding single-modal database in the multi-modal database to obtain the target data of different modalities at step S13 may include: calling each of a plurality of multi-modal agents to perform data retrieval from a respectively corresponding single-modal database according to the single-modal data retrieval statement for each of the single-modal databases to obtain retrieval data and vectorize the retrieval data, to obtain the target data of different modalities, where the multi-modal agents correspond one-to-one to the single-modal databases, one multi-modal agent is configured to be responsible for retrieving one single-modal database, and each of the multi-modal agents is independent of each other.

During retrieval, the multi-modal agent may adopt an appropriate retrieval strategy according to each of the single-modal data retrieval statements. For example, the multi-modal agent may select a corresponding retrieval mode according to a retrieved modal type. If it is text retrieval, text retrieval techniques may be used, such as keyword matching retrieval using an inverted index; if it is image retrieval, a retrieval mode of image feature matching may be used; for image and audio data, feature vector indexes may be used for similarity retrieval; for relational data and wide-table data, retrieval may be performed in relational databases and data warehouses according to traditional SQL query execution processes. In addition, information of a plurality modalities may also be combined for joint retrieval to improve the accuracy and comprehensiveness of retrieval.

Vectorization of the retrieved data may be implemented as follows. For data of different modalities, such as text, images, audio, etc., corresponding techniques may be used to perform feature extraction on the retrieved data, thereby obtaining a vector of the retrieved data. For example, for text, word vectors and text embedding models (such as BERT and Word2Vec, etc.) may be used to transform the retrieved data into a numerical vector representation, such that a computer can process and understand. For images, convolutional neural networks may be used to extract feature vectors of the images, which can capture information such as color, texture and shape of the images. For audio data, encoding may be performed through techniques such as acoustic models and transformed into audio feature vectors.

By adopting the above technical solution, the retrieval efficiency can be improved, the data processing complexity can be reduced, and the service requirements with high timeliness requirements can be met.

In some embodiments, performing the feature fusion and the modality alignment processing on the retrieved target data of different modalities at step S13 includes: calling the large language model to map the target data of different modalities to a same embedding space, performing the modality alignment processing on the target data of different modalities in the same embedding space, and performing the feature fusion on the target data of different modalities after the modality alignment processing. Mapping the target data of different modalities to the same embedding space can make the target data of different modalities comparable in the same embedding space, which may facilitate subsequent alignment and feature fusion operations. For example, by training a multi-modal encoder, target data of modalities such as text, image, audio, etc. may be encoded into the same feature space, so that the similarity between these target data may be measured by the distance between vectors. In addition, there are various methods for feature fusion, such as simple concatenation, weighted summation, and attention mechanism-based fusion. The attention mechanism may automatically assign different weights according to the importance of data of different modalities, so as to better fuse features of multi-modal data and obtain a fusion result of a specified format (for example, two-dimensional table, JSON, XML, etc.). Through feature fusion, a unified multi-modal data representation can be generated. After feature fusion, further processing (for example, aggregation, sorting, filtering, etc.) may be performed on the data after feature fusion according to specific retrieval requirements of the user, such as aggregation, sorting, filtering, etc.

Performing modality alignment of the target data of each modal before feature fusion can ensure that the target data of different modalities is aligned in time, space, and/or semantics, which can ensure the accuracy of the feature fusion result. For example, in video and audio multi-modal data, it is necessary to align video frames with audio segments, so as to better understand and fuse the information between them. For multi-modal data comprising text and images, semantic alignment is also required, for example, matching an object described in the text with an object in the image.

After obtaining the unified multi-modal data representation, it may be formatted and visualized as a retrieval result according to requirements of a user interaction layer, and then returned to a user interface for display.

In some embodiments, the multi-modal fusion data processing method according to the embodiments of the present disclosure can further implement storage of multi-modal data. For example, a storage medium for storing data targeted by a storage operation may be determined according to an access frequency, importance and storage cost of the data targeted by the storage operation. For example, frequently accessed data is stored in a memory or a solid-state disk to improve data access speed; and infrequently accessed data is stored on a disk to reduce storage costs. In this way, efficient storage and access of data can be achieved.

In some embodiments, the large language model, the multi-modal RAG model and the multi-modal agent may be trained as follows. The following description is made by using an example of SQL statements.

First, pre-training and fine-tuning are performed on the large language model, the multi-modal RAG model and the multi-modal agent. In the pre-training stage, a large amount of text data containing SQL statements may be included in a training corpus, so that the large language model, the multi-modal RAG model and the multi-modal agent learn the syntax, structure and common patterns of SQL. In the fine-tuning stage, the pre-trained large language model, the multi-modal RAG model and the multi-modal agent are further trained using a specific labeled SQL dataset, so that the large language model, the multi-modal RAG model and the multi-modal agent can more accurately generate and understand SQL statements that meet requirements. The labeling information may include a function of the SQL statement, a corresponding database table structure, query conditions, etc., to help the large language model, the multi-modal RAG model and the multi-modal agent better understand and generate correct SQL.

In addition, a clear input format may also be defined, for example, using a specific prompt or marker to indicate the start and end of the SQL statement, so that the large language model, the multi-modal RAG model and the multi-modal agent can clearly know that SQL-related content needs to be processed. For the output, the large language model, the multi-modal RAG model and the multi-modal agent may be required to generate SQL statements according to a predetermined format, such as following specific indentation rules, capitalizing keywords, etc., so as to make it easier to parse and use the generated SQL statements.

In addition, a knowledge graph related to the multi-modal database may also be created, which contains information such as a database architecture, a table relationship, and a field meaning, and the RAG framework may be used to combine it with the LLM. In this way, when generating SQL, the information in the knowledge graph may be referred to, and the association between the data and the query requirements may be better understood, thereby generating more accurate and logical SQL statements.

In addition, the large language model, the multi-modal RAG model and the multi-modal agent may also be guided to generate correct SQL through multi-round interactions. The user may gradually provide more information and constraints, so that the model may be continuously adjusted and improve the generated SQL statement according to the feedback, until the requirements are met. When there is an error in the SQL generated by the large language model, the multi-modal RAG model and the multi-modal agent, clear error prompts and correction suggestions are given in time, so that the large language model, the multi-modal RAG model and the multi-modal agent can learn from the error and improve the SQL recognition and generation capabilities. For example, the user's feedback on the retrieval accuracy of the retrieval result may be acquired, the retrieval accuracy of the retrieval result is evaluated according to the feedback, and parameters of the large language model, the multi-modal RAG model and the multi-modal agent are adjusted according to the evaluation result. For example, a translation strategy, a retrieval strategy, a data embedding strategy, an index construction strategy, a fusion method, and parameters of the large language model, the multi-modal RAG model and the multi-modal agent may be adjusted according to the evaluated result, so as to improve the performance and accuracy of the system.

In addition, the SQL parser may also be integrated with the LLM, and after the large language model, the multi-modal RAG model and the multi-modal agent generate SQL statements, the SQL parser is immediately used to perform syntax checking and semantic analysis on them, and the parsing result is fed back to the large language model, the multi-modal RAG model and the multi-modal agent, so that the large language model, the multi-modal RAG model and the multi-modal agent can know whether the generated SQL is correct and what problems exist, thereby performing self-correction. Further in combination with a SQL executor, the generated SQL statement is executed in an actual database environment, and the execution result is returned to the large language model, the multi-modal RAG model and the multi-modal agent, so that the large language model, the multi-modal RAG model and the multi-modal agent may further optimize and adjust the SQL according to the result, so as to better meet the query requirements.

By adopting the above technical solution, training of the large language model, the multi-modal RAG model and the multi-modal agent can be implemented.

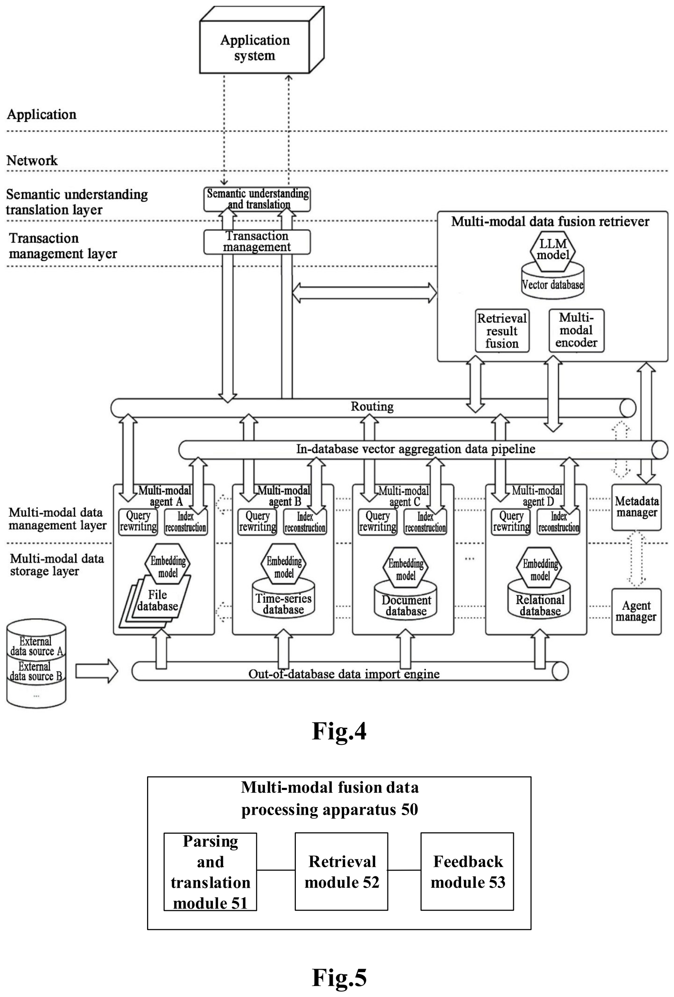

Fig. 4 is an architecture diagram of a multi-modal fusion data processing architecture according to an embodiment of the present disclosure.

As shown in Fig. 4, the multi-modal fusion data processing architecture includes a semantic understanding translation layer, a transaction management layer, a multi-modal data management layer and a multi-modal data storage layer. An external application system may access the multi-modal fusion data processing architecture according to the embodiments of the present disclosure through a network, so as to implement processing requirements of the external application system, such as query and data storage.

The multi-modal fusion data processing architecture is implemented based on a multi-modal RAG model, a multi-modal agent and a large language model. For multi-modal data such as time-series, text, pictures, etc., the multi-modal data storage layer can be compatible with existing single-modal databases such as document databases, time-series databases, wide-table databases, relational databases, etc. and object storage, so as to avoid the solution of unified fusion storage of full volume data and retention of multiple copies. Moreover, the multi-modal fusion data processing architecture respectively encapsulates data query capability, result generation capability, and extraction vector embedding RAG capability with decoupled and independent multi-modal agents, and provides unified and consistent capability for the multi-modal semantic understanding translation layer and the multi-modal data fusion retriever based on the LLM model.

The semantic understanding translation layer may be configured to implement operations such as parsing, translation and semantic understanding as described above.

The transaction management layer may be configured to be responsible for management and coordination of transaction operations in the multi-modal database to ensure the consistency, atomicity, isolation and durability of data in the multi-modal database.

The transaction management layer may be configured to manage a start and an end of a transaction, for example, be responsible for identifying the start and the end of the transaction. When a user performs a set of related database operations and wants to commit or roll them back as a whole, the transaction management layer records a start point of the transaction, and after all operations are completed, decides whether to commit the transaction to make all operations effective or roll back the transaction to restore the data to a state before the transaction starts, according to an execution situation.

The transaction management layer may perform concurrent control of transactions. In a multi-user environment, the transaction management layer can coordinate concurrent execution of multiple transactions to prevent data inconsistency and conflicts. By adopting techniques such as a locking mechanism, timestamp ordering, and multi-version concurrent control, operations between different transactions are scheduled and isolated according to certain rules, to avoid that an uncompleted operation of one transaction is visible to other transactions, thereby ensuring data consistency and isolation.

The transaction management layer may perform transaction recovery. In the case of system failure or abnormality, the transaction management layer is responsible for recovering uncompleted transactions and ensuring data persistence. By recording log information of the transaction, including operation records, values before and after data modification, etc., the transaction management layer can perform redo or undo operations according to the log when the system restarts or recovers, to restore the multi-modal database to a consistent state.

The transaction management layer may also handle nested transactions. The transaction management layer may support execution and management of nested transactions, and the nested transaction means that one transaction may contain other sub-transactions. In this case, the transaction management layer needs to correctly handle the relationship between the sub-transaction and the parent transaction, including transaction committing, rolling back, and resource allocation and release, etc., to ensure the correctness and consistency of the entire transaction hierarchy.

The multi-modal data management layer is a core part of the multi-modal fusion data processing architecture, and is responsible for unified management and operation of data of multiple data modalities, including data storage, retrieval, update, deletion, etc., and at the same time provides a conversion and fusion function between the data modalities.

The multi-modal data management layer may perform adaptation of data modalities. For example, for different data modalities (such as a relational data modal, a document data modal, a graph data modal, a key-value pair data modal, etc.), corresponding adaptation interfaces and operation methods are provided, so that data of various modalities can be effectively stored and managed. For example, for relational data, operations such as definition of a table structure, index creation, data insertion and query are provided; for document data, functions such as creation, update and full-text search of documents are supported.

The multi-modal data management layer may further perform data fusion and conversion, that is, implement data conversion and fusion between different data modalities, and support queries and operations across data modalities. For example, the multi-modal data management layer can perform an association query on relational data and document data, or convert node and edge information in graph data into relational data for storage and analysis. By defining mapping rules and conversion functions between data modalities, the multi-modal data management layer can implement seamless data flow and collaborative processing.

The multi-modal data management layer can implement data consistency maintenance to ensure data consistency during multi-modal data operation. When updating or modifying related data in different data modalities, the multi-modal data management layer needs to ensure the consistency and integrity of the data, and avoid data inconsistency. For example, when updating entity data that simultaneously exists in a relational table and a document collection, the multi-modal data management layer needs to update data in both places at the same time to ensure data consistency.

The multi-modal data management layer may further perform data indexing and query optimization. For example, various index structures may be created and managed according to characteristics and query requirements of different data modalities, so as to improve the efficiency of data retrieval. In addition, the query of multi-modal data may also be optimized, the data modalities and operation types involved in the query statement may be analyzed, and an appropriate query execution plan and index may be selected to accelerate the query and access speed of data.

The multi-modal data storage layer is responsible for storing multi-modal data on an underlying storage medium in a suitable physical storage manner, and providing efficient data read-write and access functions. According to requirements, the multi-modal data storage layer may be constructed according to data retrieval requirements of an existing database or application system.

The multi-modal data storage layer may use a multi-modal agent to encapsulate and decouple read-write, caching, embedding and other capabilities of each single-modal database, that is, each single-modal database uses an independent multi-modal agent to perform read-write, caching, embedding, etc.

The multi-modal data storage layer may be responsible for management of various storage media, such as a disk, a memory, a solid-state disk, etc. A suitable storage medium may be selected to store data according to factors such as data access frequency, importance and storage cost. For example, frequently accessed data is stored in the memory or the solid-state disk to improve data access speed; and infrequently accessed data is stored on the disk to reduce storage costs.

The multi-modal data storage layer may perform data organization and layout. For example, a reasonable data organization and layout manner is designed for different data modalities and data characteristics. For example, for relational data, a table form may be used for storage, and a corresponding storage structure may be established according to a primary key and an index; for document data, storage may be performed according to a structure and attributes of a document, and an inverted index may be established to support full-text search. By optimizing data organization and layout, data storage efficiency and access performance can be improved.

The multi-modal data storage layer may further select a data storage format. That is, a suitable data storage format is selected to store the multi-modal data, such as a binary format, a text format, a JSON format, etc. Different data storage formats have different advantages and disadvantages, and need to be selected according to factors such as data type, application scenario and performance requirements. For example, for structured relational data, a binary relational database storage format may be selected; for semi-structured or unstructured document data, a text format such as JSON or XML may be used for storage.

The multi-modal data storage layer may further adopt a data read-write and caching mechanism. For example, an efficient data read-write interface and a caching mechanism may be provided to speedup data access. By adopting a caching technology, frequently-used data is cached in the memory, the number of accesses to the underlying storage medium is reduced, and data read-write performance is improved. In addition, the multi-modal data storage layer may further optimize data read-write operations, and adopt batch read-write, asynchronous read-write and other manners to improve data read-write efficiency and system concurrent processing capability.

The multi-modal fusion data processing architecture may further include a metadata manager, which is configured to uniformly maintain metadata of databases of different modalities and provide a consistent data access view for multi-modal data fusion retrieval. For example, when performing data retrieval of multi-modal fusion, the metadata of each of the single-modal databases may be acquired from the metadata manager.

In addition, in the multi-modal fusion data processing architecture, an embedding model may transform the retrieved data into a vector. The transformed vector may be re-indexed. An in-database vector aggregation data pipeline may transmit the transformed vector to the multi-modal data fusion retriever, and the multi-modal data fusion retriever may fuse vectors transmitted by the in-database vector aggregation data pipeline to obtain a fusion result, which is fed back to the user. In addition, the multi-modal data fusion retriever may store the vectors transmitted by the in-database vector aggregation data pipeline into a vector database, and when needed, the vectors in the vector database may be analyzed based on the large language model.

In addition, the multi-modal fusion data processing architecture may further include a multi-modal agent manager, which is configured to manage multi-modal agents. The multi-modal fusion data processing architecture may further include an out-of-database data import engine, which is configured to import an external data source into a corresponding single-modal database.

By adopting the above multi-modal fusion data processing architecture, the following beneficial effects can be achieved: (1) the association and complementarity between data of different modalities can be fully mined, the limitation of single-modal data query may be avoided, and the overall utilization efficiency of data may be improved; (2) the extended query syntax and the multi-modal query function enable users to flexibly construct the multi-modal data retrieval statement according to specific needs, to meet diverse query scenarios, and the flexibility of query is enhanced; (3) the application of the multi-modal agent and the multi-modal RAG model enables provision of intelligent query services, which can not only accurately return data, but also can provide value-added services such as data analysis, decision-making suggestions and knowledge expansion, to improve user experience, and achieve a simple and efficient service mode; (4) utilizing the semantic understanding capability of the large language model may improve the understanding compatibility capability for statements, have certain fault-tolerance capability for syntax, table names, column names, etc. with local input errors, and accurate semantic understanding is provided through error correction or fuzzy query, expected query results are returned, and the fault-tolerance compatibility capability of query is improved.

Fig. 5 is a schematic block diagram of a multi-modal fusion data processing apparatus according to an embodiment of the present disclosure. As shown in Fig. 5, the multi-modal fusion data processing apparatus can be applied to scenarios of performing various operations on a multi-modal database, such as retrieval and storage. The multi-modal fusion data processing apparatus 50 may include: a parsing and translation module 51, which is configured to receive a multi-modal data retrieval statement, parse the multi-modal data retrieval statement, and translate the multi-modal data retrieval statement into single-modal data retrieval statements respectively corresponding to a plurality of modalities; a retrieval module 52, which is configured to perform, according to each of the single-modal data retrieval statements, data retrieval in a corresponding single-modal database in a multi-modal database to obtain target data of different modalities, where single-modal databases respectively corresponding to the plurality of modalities are maintained in the multi-modal database, and data management is performed independently for each of the single-modal databases; and a feedback module 53, which is configured to perform feature fusion and modality alignment processing on the retrieved target data of different modalities to generate a unified multi-modal data representation, and feed back the unified multi-modal data representation as a retrieval result.

By adopting the above technical solution, the multi-modal data retrieval statement can be received, the multi-modal data retrieval statement is parsed and translated into the single-modal data retrieval statements respectively corresponding to the plurality of modalities, and data retrieval is performed in the corresponding single-modal database in the multi-modal database according to each of the single-modal data retrieval statements to obtain the target data of different modalities, where the single-modal databases respectively corresponding to the plurality of modalities are maintained in the multi-modal database, and data management is performed independently for each of the single-modal databases, and then the feature fusion and modality alignment processing are performed on the retrieved target data of different modalities to generate the unified multi-modal data representation, and the unified multi-modal data representation is fed back as the retrieval result. In this way, when integrating multiple modals of data in response to an application service, the data processing complexity can be reduced, the data processing efficiency can be improved, and service requirements with high timeliness requirements can be met.

Optionally, the parsing and translation module 51 parses the multi-modal data retrieval statement, including:
calling a large language model to decompose the multi-mode data retrieval statement into words and syntactic units and constructing a syntax tree based on the words and the syntactic units; and
calling a multi-modal retrieval augmented generation model to retrieve a preliminary semantic understanding result from a corresponding knowledge base based on the syntax tree, and calling the large language model to process the preliminary semantic understanding result to obtain parsing of the multi-modal data retrieval statement.

Optionally, the multi-modal data fusion processing apparatus further includes an optimization module, which is configured to:
optimize the translated single-modal data retrieval statements according to data distribution and statistical information of the multi-modal database and complexity of the translated single-modal data retrieval statements, where the data distribution refers to a probability distribution of data stored in each of the single-modal databases, and the statistical information refers to statistical information related to the data stored in each of the single-modal databases.

Optionally, the optimization module optimizes the translated single-modal data retrieval statements according to the data distribution and the statistical information of the multi-modal database and the complexity of the translated single-modal data retrieval statements, including:
adjusting at least one of a connection mode, a connection sequence, an index construction mode and a view creation mode of the translated single-modal data retrieval statements according to the data distribution and the statistical information of the multi-modal database and the complexity of the translated single-modal data retrieval statements.

Optionally, the retrieval module 52 performs, according to each of the single-modal data retrieval statements, the data retrieval in the corresponding single-modal database in the multi-modal database to obtain the target data of different modalities, including:
calling each of a plurality of multi-modal agents to perform data retrieval from a respectively corresponding single-modal database according to the single-modal data retrieval statement for each of the single-modal databases to obtain retrieval data and vectorize the retrieval data, to obtain the target data of different modalities, where the multi-modal agents correspond one-to-one to the single-modal databases, one multi-modal agent is configured to be responsible for retrieving one single-modal database, and each of the multi-modal agents is independent of each other.

Optionally, the feedback module 53 performs feature fusion and modality alignment processing on the retrieved target data of different modalities, including:
calling a large language model to map the target data of different modalities to a same embedding space, performing the modality alignment processing on the target data of different modalities in the same embedding space, and performing the feature fusion on the target data of different modalities after the modality alignment processing.

Optionally, the multi-modal fusion data processing apparatus further includes an adjustment module, which is configured to:
acquire a user's feedback on retrieval accuracy of the retrieval result;
evaluate the retrieval accuracy of the retrieval result according to the user's feedback; and
adjust a parameter of a related model according to an evaluation result.

Specific implementations of operations performed by each of the modules in the multi-modal fusion data processing apparatus according to the embodiments of the present disclosure have been described in detail in the related methods, and are not repeated herein.

The present disclosure further provides a computer-readable medium having a computer program stored thereon, where the computer program when executed by a processing apparatus, implements the steps of any method in the present disclosure are implemented.

The present disclosure further provides an electronic device, including:
a storage apparatus having a computer program stored thereon; and
a processing apparatus, configured to execute the computer program in the storage apparatus to perform the steps of any method in the present disclosure.

The present disclosure further provides a computer program product, including a computer program which, when executed by a processor, implements the steps of any method in the present disclosure.

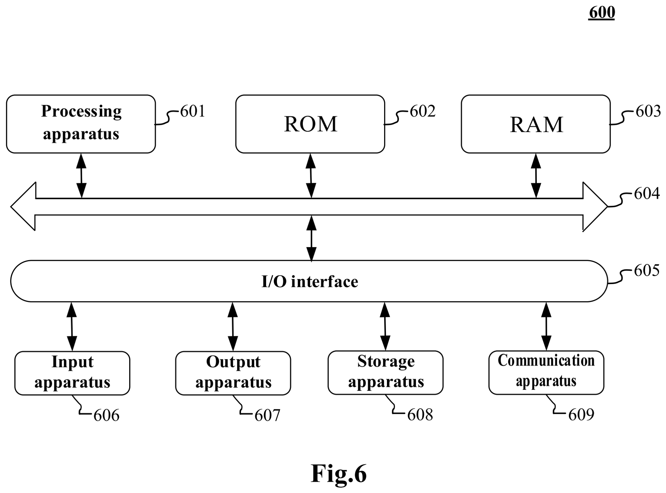

Referring now to Fig. 6, which illustrates a schematic structural diagram of an electronic device 600 suitable for implementing an embodiment of the present disclosure. The terminal device in the embodiment of the present disclosure may include, but are not limited to, mobile terminals such as a mobile phone, a laptop, a digital broadcast receiver, a personal digital assistant (PDA), a tablet computer (PAD), a portable media player (PMP), a vehicle-mounted terminal (such as a vehicle navigation terminal), etc., and stationary terminals such as a digital TV, a desktop computer, etc. The electronic device shown in Fig. 6 is only an example, and should not impose any limitation on the function and scope of use of the embodiments of the present disclosure.

As shown in Fig. 6, the electronic device 600 may include a processing apparatus 601 (such as a central processing unit, a graphics processing unit, etc.), which may perform various appropriate actions and processing according to a program stored in a read-only memory (ROM) 602 or a program loaded into a random access memory (RAM) 603 from a storage apparatus 608. The RAM 603 further stores various programs and data required for operations of the electronic device 600. The processing apparatus 601, the ROM 602, and the RAM 603 are interconnected by means of a bus 604. An input/output (I/O) interface 605 is also connected to the bus 604.

Usually, the following apparatuses may be connected to the I/O interface 605: an input apparatus 606 including, for example, a touch screen, a touchpad, a keyboard, a mouse, a camera, a microphone, an accelerometer, a gyroscope, etc.; an output apparatus 607 including, for example, a liquid crystal display (LCD), a speaker, a vibrator, etc.; a storage apparatus 608 including, for example, a magnetic tape, a hard disk, etc.; and a communication apparatus 609. The communication apparatus 609 may allow the electronic device 600 to communicate wirelessly or wiredly with other devices to exchange data. Although Fig. 6 shows the electronic device 600 with various apparatuses, it should be understood that not all of the illustrated apparatuses are required to be implemented or provided. More or fewer apparatuses may be implemented or provided alternatively.

In particular, according to the embodiments of the present disclosure, the process described above with reference to the flowchart may be implemented as a computer software program. For example, the embodiments of the present disclosure include a computer program product, which includes a computer program carried on a non-transitory computer-readable medium, where the computer program contains program codes for performing the method shown in the flowchart. In such an embodiment, the computer program may be downloaded and installed from a network through the communication apparatus 609, or installed from the storage apparatus 608, or installed from the ROM 602. When the computer program is executed by the processing apparatus 601, the above-mentioned functions defined in the method of the embodiments of the present disclosure are executed.

It should be noted that the above-mentioned computer-readable medium in the present disclosure may be a computer-readable signal medium, a computer-readable storage medium, or any combination thereof. The computer-readable storage medium may be, for example, but not limited to, an electrical, magnetic, optical, electromagnetic, infrared, or semiconductor system, apparatus or device, or any combination of the above. More specific examples of the computer-readable storage medium may include, but are not limited to: an electrical connection with one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above. In the present disclosure, the computer-readable storage medium may be any tangible medium that contains or stores a program, and the program may be used by or in combination with an instruction execution system, apparatus or device. In the present disclosure, the computer-readable signal medium may include a data signal propagated on a baseband or as a part of a carrier wave, and computer-readable program codes are carried therein. This propagated data signal may take a variety of forms, including but not limited to an electromagnetic signal, an optical signal, or any suitable combination of the above. The computer-readable signal medium may also be any computer-readable medium other than the computer-readable storage medium, and the computer-readable signal medium may send, propagate or transmit a program for use by or in combination with an instruction execution system, apparatus or device. The program codes contained on the computer-readable medium may be transmitted by any suitable medium, including but not limited to: a wire, an optical cable, a radio frequency (RF), etc., or any suitable combination of the above.

In some implementations, clients and servers may communicate using any currently known or future developed network protocol, such as the hypertext transfer protocol (HTTP), and may be interconnected with any form or medium of digital data communication (for example, a communication network). Examples of the communication network include a local area network ("LAN"), a wide area network ("WAN"), an internet (for example, the Internet), a peer-to-peer network (for example, an Ad-Hoc network), and any network currently known or to be developed in the future.

The above computer-readable medium may be included in the above electronic device, or exist alone without being assembled into the electronic device.

The above computer-readable medium carries one or more programs which, when t executed by the electronic device, causes the electronic device to: receive a multi-modal data retrieval statement, parse the multi-modal data retrieval statement, and translate the multi-modal data retrieval statement into single-modal data retrieval statements respectively corresponding to a plurality of modalities; perform, according to each of the single-modal data retrieval statements, data retrieval in a corresponding single-modal database in a multi-modal database to obtain target data of different modalities, where single-modal databases respectively corresponding to the plurality of modalities are maintained in the multi-modal database, and data management is performed independently for each of the single-modal databases; and perform feature fusion and modality alignment processing on the retrieved target data of different modalities to generate a unified multi-modal data representation, and feed back the unified multi-modal data representation as a retrieval result.

The computer program codes used to perform the operations of the present disclosure may be written in one or more programming languages or a combination thereof, where the above programming languages include but are not limited to object-oriented programming languages such as Java, Smalltalk, C++, and include conventional procedural programming languages such as "C" language or similar programming languages. The program codes may be executed entirely on a user's computer, partly executed on a user's computer, executed as an independent software package, partly executed on a user's computer and partly executed on a remote computer, or entirely executed on a remote computer or server. In the case of involving the remote computer, the remote computer may be connected to a user's computer through any kind of network, including a local area network (LAN) or a wide area network (WAN), or it may be connected to an external computer (for example, connected by using Internet provided by an Internet service provider).

The flowcharts and block diagrams in the drawings illustrate the possibly implemented architectures, functions, and operations of the system, method, and computer program product according to various embodiments of the present disclosure. In this regard, each block in the flowchart or block diagram may represent a module, program segment, or part of codes, and the module, program segment, or part of codes contains one or more executable instructions for implementing the specified logical functions. It should also be noted that, in some alternative implementations, the functions marked in the blocks may also occur in an order different from that marked in the drawings. For example, two blocks shown in succession may be actually executed substantially in parallel, or they may sometimes be executed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The involved modules described in the embodiments of the present disclosure may be implemented by software or by hardware. The name of the module does not constitute a limitation on the module itself under certain circumstances, for example, the parsing and translation module may also be described as "a module for receiving a multi-modal data retrieval statement, parsing the multi-modal data retrieval statement, and translating the multi-modal data retrieval statement into single-modal data retrieval statements respectively corresponding to a plurality of modalities".

The functions described above herein may be performed at least partly by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logic device (CPLD), etc.

In the context of the present disclosure, a machine-readable medium may be a tangible medium that may contain or store programs for use by or in combination with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above.

According to one or more embodiments of the present disclosure, Example 1 provides a multi-modal fusion data processing method, including:
receiving a multi-modal data retrieval statement, parsing the multi-modal data retrieval statement, and translating the multi-modal data retrieval statement into single-modal data retrieval statements respectively corresponding to a plurality of modalities;
performing, according to each of the single-modal data retrieval statements, data retrieval in a corresponding single-modal database in a multi-modal database to obtain target data of different modalities; where, the single-modal databases respectively corresponding to the plurality of modalities are maintained in the multi-modal database, and data management is performed independently for each of the single-modal databases;
performing feature fusion and modality alignment processing on the retrieved target data of different modalities to generate a unified multi-modal data representation, and feeding back the unified multi-modal data representation as a retrieval result.

According to one or more embodiments of the present disclosure, Example 2 provides the method of Example 1, where the parsing the multi-modal data retrieval statement includes:
calling a large language model to decompose the multi-modal data retrieval statement into words and syntactic units and construct a syntax tree based on the words and the syntactic units;
calling a multi-modal retrieval augmented generation model to retrieve a preliminary semantic understanding result from a corresponding knowledge base based on the syntax tree, and calling the large language model to process the preliminary semantic understanding result to obtain parsing of the multi-modal data retrieval statement.

According to one or more embodiments of the present disclosure, Example 3 provides the method of Example 1, where the method further includes:
optimizing the translated single-modal data retrieval statements according to data distribution and statistical information of the multi-modal database and complexity of the translated single-modal data retrieval statements, where the data distribution refers to a probability distribution of data stored in each of the single-modal databases, the statistical information refers to statistical information related to the data stored in each of the single-modal databases.

According to one or more embodiments of the present disclosure, Example 4 provides the method of Example 3, where optimizing the translated single-modal data retrieval statements according to the data distribution and the statistical information of the multi-modal database and the complexity of the translated single-modal data retrieval statements includes:
adjusting at least one of a connection mode, a connection sequence, an index construction mode and a view creation mode of the translated single-modal data retrieval statements according to the data distribution and the statistical information of the multi-modal database and the complexity of the translated single-modal data retrieval statement.

According to one or more embodiments of the present disclosure, Example 5 provides the method of Example 1, where performing, according to each of the single-modal data retrieval statements, the data retrieval in the corresponding single-modal database in the multi-modal database to obtain the target data of different modalities includes:
calling each of a plurality of multi-modal agents to perform data retrieval from a respectively corresponding single-modal database according to the single-modal data retrieval statement for each of the single-modal databases to obtain retrieval data and vectorize the retrieval data, to obtain the target data of different modalities;
where the multi-modal agents correspond one-to-one to the single-modal databases, one multi-modal agent is configured to be responsible for retrieving one single-modal database, and each of the multi-modal agents is independent of each other.

According to one or more embodiments of the present disclosure, Example 6 provides the method of Example 1, where performing feature fusion and modality alignment processing on the retrieved target data of different modalities includes:
calling a large language model to map the target data of different modalities to a same embedding space, performing the modality alignment processing on the target data of different modalities in the same embedding space, and performing the feature fusion on the target data of different modalities after the modality alignment processing.

According to one or more embodiments of the present disclosure, Example 7 provides the method of Example 2, 5 or 6, where, the method further includes:
acquiring a user's feedback on retrieval accuracy of the retrieval result;
evaluating the retrieval accuracy of the retrieval result according to the user's feedback;
adjusting a parameter of a related model according to an evaluation result.

According to one or more embodiments of the present disclosure, Example 8 provides a multi-modal fusion data processing apparatus, including:
a parsing and translation module, configured to receive a multi-modal data retrieval statement, parse the multi-modal data retrieval statement, and translate the multi-modal data retrieval statement into single-modal data retrieval statements respectively corresponding to a plurality of modalities;
a retrieval module, configured to perform, according to each of the single-modal data retrieval statements, data retrieval in a corresponding single-modal database in a multi-modal database to obtain target data of different modalities; where, the single-modal databases respectively corresponding to the plurality of modalities are maintained in the multi-modal database, and data management is performed independently for each of the single-modal databases;
a feedback module, configured to perform feature fusion and modality alignment processing on the retrieved target data of different modalities to generate a unified multi-modal data representation, and feed back the unified multi-modal data representation as a retrieval result.

According to one or more embodiments of the present disclosure, Example 9 provides a computer-readable medium having a computer program stored thereon, where the computer program which, when executed by a processing apparatus, implements the steps of the method according to any of Examples 1-7.

According to one or more embodiments of the present disclosure, Example 10 provides an electronic device, including:
a storage apparatus having a computer program stored thereon;
a processing apparatus, configured to execute the computer program in the storage apparatus to perform steps of the method according to any of Examples 1-7.

According to one or more embodiments of the present disclosure, Example 11 provides a computer program product, including a computer program which, when executed by a processor, implements the steps of the method of any of Examples 1-7 are implemented.

The above description is only the preferred embodiments of the present disclosure and an explanation of the applied technical principles. Those skilled in the art should understand that the disclosed scope involved in the present disclosure is not limited to the technical solutions formed by the specific combination of the above technical features, and should also cover other technical solutions formed by any combination of the above technical features or their equivalent features. For example, the above features and the technical features provided in the present disclosure (but not limited to) with similar functions are replaced each other to form a technical solution.

In addition, although the various operations are described in a specific order, this should not be understood as requiring the operations to be performed in the specific order shown or in a sequential order. Under certain circumstances, multitasking and parallel processing may be beneficial. Likewise, although the above discussion contains a number of specific implementation details, these should not be construed as limiting the scope of the present disclosure. Certain features that are described in the context of separate embodiments may also be implemented in combination in a single embodiment. Conversely, various features described in the context of a single embodiment may also be implemented in a plurality of embodiments individually or in any suitable sub-combination.

Although the subject matter has been described in a language specific to structural features and/or logical action0073 of the method, it should be understood that the subject matter defined in the appended claims is not necessarily limited to the specific features or actions described above. Conversely, the specific features and actions described above are only exemplary forms of implementing the claims. Regarding the apparatuses in the above embodiments, the specific manner in which each module performs an operation has been described in detail in the embodiments related to the method, and will not be described in detail here.

## Claims

1. A multi-modal fusion data processing method, comprising:
receiving (S11) a multi-modal data retrieval statement, parsing the multi-modal data retrieval statement, and translating the multi-modal data retrieval statement into single-modal data retrieval statements respectively corresponding to a plurality of modalities;
performing (S12), according to each of the single-modal data retrieval statements, data retrieval in a corresponding single-modal database in a multi-modal database to obtain target data of different modalities, wherein single-modal databases respectively corresponding to the plurality of modalities are maintained in the multi-modal database, and data management is performed independently for each of the single-modal databases; and
performing (S13) feature fusion and modality alignment processing on the retrieved target data of different modalities to generate a unified multi-modal data representation, and feeding back the unified multi-modal data representation as a retrieval result.

2. The method of claim 1, wherein parsing the multi-modal data retrieval statement comprises:
calling a large language model to decompose the multi-modal data retrieval statement into words and syntactic units and constructing a syntax tree based on the words and the syntactic units; and
calling a multi-modal retrieval augmented generation model to retrieve a preliminary semantic understanding result from a corresponding knowledge base based on the syntax tree, and calling the large language model to process the preliminary semantic understanding result to obtain parsing of the multi-modal data retrieval statement.

3. The method of claim 1 or 2, further comprising:
optimizing the translated single-modal data retrieval statements according to data distribution and statistical information of the multi-modal database and complexity of the translated single-modal data retrieval statements, wherein the data distribution refers to a probability distribution of data stored in each of the single-modal databases, and the statistical information refers to statistical information related to the data stored in each of the single-modal databases.

4. The method of claim 3, wherein optimizing the translated single-modal data retrieval statements according to the data distribution and the statistical information of the multi-modal database and the complexity of the translated single-modal data retrieval statements comprises:
adjusting at least one of a connection mode, a connection sequence, an index construction mode and a view creation mode of the translated single-modal data retrieval statements according to the data distribution and the statistical information of the multi-modal database and the complexity of the translated single-modal data retrieval statements.

5. The method of any one of claims 1 to 4, wherein performing, according to each of the single-modal data retrieval statements, the data retrieval in the corresponding single-modal database in the multi-modal database to obtain the target data of different modalities comprises:
calling each of a plurality of multi-modal agents to perform data retrieval from a respectively corresponding single-modal database according to the single-modal data retrieval statement for each of the single-modal databases to obtain retrieval data and vectorize the retrieval data, to obtain the target data of different modalities; wherein the multi-modal agents correspond one-to-one to the single-modal databases, one multi-modal agent is configured to be responsible for retrieving one single-modal database, and each of the multi-modal agents is independent of each other.

6. The method of any one of claims 1 to 5, wherein performing the feature fusion and the modality alignment processing on the retrieved target data of different modalities comprises:
calling a large language model to map the target data of different modalities to a same embedding space, performing the modality alignment processing on the target data of different modalities in the embedding space, and performing the feature fusion on the target data of different modalities after the modality alignment processing.

7. The method of any of claims 1 to 6, further comprising:
acquiring a user's feedback on retrieval accuracy of the retrieval result;
evaluating the retrieval accuracy of the retrieval result according to the user's feedback; and
adjusting a parameter of a related model according to an evaluation result.

8. A multi-modal fusion data processing apparatus (50), comprising:
a parsing and translation module (51), configured to receive a multi-modal data retrieval statement, parse the multi-modal data retrieval statement, and translate the multi-modal data retrieval statement into single-modal data retrieval statements respectively corresponding to a plurality of modalities;
a retrieval module (52), configured to perform, according to each of the single-modal data retrieval statements, data retrieval in a corresponding single-modal database in a multi-modal database to obtain target data of different modalities; wherein single-modal databases respectively corresponding to the plurality of modalities are maintained in the multi-modal database, and data management is performed independently for each of the single-modal databases; and
a feedback module (53), configured to perform feature fusion and modality alignment processing on the retrieved target data of different modalities to generate a unified multi-modal data representation, and feed back the unified multi-modal data representation as a retrieval result.

9. A computer-readable medium having a computer program stored thereon, wherein the computer program which, when executed by a processing apparatus, implements the steps of the method of any of claims 1 to 7.

10. An electronic device (600), comprising:
a storage apparatus (608) having a computer program stored thereon; and
a processing apparatus (601), configured to execute the computer program in the storage apparatus (608) to perform the steps of the method of any of claims 1 to 7.

11. A computer program product comprising a computer program which, when executed by a processor, implements the steps of the method of any of claims 1 to 7.
